Europäisches Patentamt

European Patent Office

Office européen des brevets

(19)

(11) **EP 1 173 799 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(21) Anmeldenummer: **00934870.7**

(22) Anmeldetag: **04.04.2000**

(51) Int Cl.[7]: **G05B 13/02**, G05B 17/02

(86) Internationale Anmeldenummer:
**PCT/DE00/01035**

(87) Internationale Veröffentlichungsnummer:
**WO 00/065412 (02.11.2000 Gazette 2000/44)**

(54) **VERFAHREN UND ANORDNUNG ZUM ENTWURF EINES TECHNISCHEN SYSTEMS**

METHOD AND DEVICE FOR DEVELOPING A TECHNICAL SYSTEM

PROCEDE ET DISPOSITIF POUR DEVELOPPER UN SYSTEME TECHNIQUE

(84) Benannte Vertragsstaaten:
**DE FR GB**

(30) Priorität: **27.04.1999 DE 19919106**

(43) Veröffentlichungstag der Anmeldung:
**23.01.2002 Patentblatt 2002/04**

(73) Patentinhaber: **SIEMENS AKTIENGESELLSCHAFT**
**80333 München (DE)**

(72) Erfinder: **STÖHR, Annelie**
**D-81543 München (DE)**

(56) Entgegenhaltungen:
- **T.MISAWA: "THE SIMILARITY METHOD IN STOCHASTIC DYNAMICAL SYSTEMS" IMA JOURNAL OF APPLIED MATHEMATICS, Bd. 59, Nr. 3, Dezember 1997 (1997-12), Seiten 261-272, XP000900649 UK**
- **M.DI PAOLA ET AL: "STOCHASTIC DYNAMICS OF NON-LINEAR SYSTEMS EXCITED BY PARAMETRIC DELTA CORRELATED PROCESSES" PROCEEDINGS OF THE 1996 7TH SPECIALITY CONFERENCE ON PROBABILISTIC MECHNAICS AND STRUCTURAL AND GEOTECHNICAL RELIABILITY, 7. August 1996 (1996-08-07), Seiten 930-933, XP000900650 USA**
- **P. MC CLINTOCK: "FURTHER EXPERIMENTAL EVIDENCE PERTAINING TO THE APPLICABILITY OF THE ITO AND STRATONOVIC STOCHASTIC CALCULI TO REAL PHYSICAL SYSTEMS" PHYSICS LETTERS, Bd. 107A, Nr. 8, 25. Februar 1985 (1985-02-25), Seiten 367-370, XP000900656 NETHERLANDS**

**Beschreibung**

Die Erfindung betrifft ein Verfahren und eine Anordnung zum Entwurf eines technischen Systems.

Für den Entwurf eines komplexen technischen Systems ist es notwendig, unter einer Menge zulässiger Arbeitspunkte (Betriebspunkte, Auslegungsparameter) mindestens einen Arbeitspunkt zu bestimmen, der einen effektiven Ablauf des Systems ermöglicht. Dabei sind oftmals Nebenbedingungen zu berücksichtigen, die die Menge der Arbeitspunkte einschränken und dementsprechend bei der Suche nach dem Arbeitspunkt mitzuberücksichtigen sind.

In der Praxis wird das technische System häufig anhand der Erfahrung und des Wissens eines (oder mehrerer) Experten entworfen. Dabei ist es von Nachteil, daß bei Überschreitung einer gewissen Komplexität für das technische System die Fehlerwahrscheinlichkeit beim manuellen Entwurf ansteigt.

Aus [1] ist ein Verfahren zur Optimierung bekannt, das einen Ansatz verfolgt, anhand dessen, basierend auf einer numerischen Lösung einer stochastischen Differentialgleichung, eine globale Optimierung durchgeführt wird. Nebenbedingungen werden dabei als Strafterme (engl.: penalty functions) berücksichtigt. Dabei ist es von Nachteil, daß der Bereich zulässiger Arbeitspunkte verlassen wird, weil

a) damit Information verschenkt wird,
b) in einem technischen System die Zulässigkeit oftmals wichtiger als die Güte ist bzw. ein Betrieb des Systems in einem unzulässigen Bereich gar nicht möglich ist und
c) Strafterme im praktischen Einsatz schwierig vorzugeben bzw. zu dimensionieren sind.

In [2] ist eine Methode zur lokalen Optimierung unter Nebenbedingungen mit Hilfe von Projektionen beschrieben, bei der insbesondere nichtlineare Nebenbedingungen berücksichtigt werden.

Das Konzept einer Stratonovich-Gleichung (auch: "Fisk-Stratonovich-Gleichung") ist aus [3], [6], [7] und [8] bekannt. Dabei bezeichnet die Stratonovich-Gleichung einen Typ stochastischer Differentialgleichungen mit speziellen (siehe [3]) Eigenschaften. In [8] ist die Anwendung von Stratonovich-Gleichungen in realen physikalischen Systemen beschrieben.

Die **Aufgabe** der Erfindung besteht darin, einen Entwurf eines technischen Systems zu ermöglichen, der ohne gesonderte Strafterme auskommt.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zum Entwurf eines technischen Systems angegeben, bei dem das technische System eine Zielfunktion umfaßt, die von einem Parametervektor mit n Parametern beeinflußt wird. Es sind Nebenbedingungen vorgegeben, anhand derer Belegungen des Parametervektors bestimmt sind, die ein Gebiet für gültige Arbeitspunkte des technischen Systems bestimmen. Mittels eines Projektionsoperators, der das Gebiet für gültige Arbeitspunkte berücksichtigt, wird eine Stratonovich-Gleichung bestimmt, durch deren numerische Lösung als Belegung des Parametervektors ein effizienter Arbeitspunkt ermittelt wird. Der ermittelte effiziente Arbeitspunkt wird zum Entwurf des technischen Systems eingesetzt.

Als eine Weiterbildung ist die Stratonovich-Gleichung derart bestimmt, daß deren Lösung in dem Gebiet der gültigen Arbeitspunkte verläuft.

Eine andere Weiterbildung besteht darin, daß die Stratonovich-Gleichung mittels eines Prädiktor-Korrektor-Verfahrens numerisch gelöst wird. Ein Prädiktor ist allgemein beschreibbar als eine Vorhersagegröße, die gegenüber der zu vorhersagenden Größe einen Fehler aufweist, welcher mittels des Korrektors weitgehend ausgeglichen wird.

Insbesondere kann der Prädiktor anhand der Trapezregel bestimmt werden. Dabei ist die Trapezregel für Riemann-Integrale beispielsweise aus [4] bekannt. Die Trapezregel für Stratonovich-Integrale folgt aus der Definition des Stratonovich-Integrals selbst. So ist das Stratonovich-Integral als ein Grenzwert der Trapezsummen definiert, die Trapezregel ist damit ein Teil der Definition des Stratonovich-Integrals. Es wird mittels Trapezsummen eine implizite Gleichung für den Prädiktor aufgestellt, die anhand eines Newton-Verfahrens approximativ gelöst wird.

Eine Ausgestaltung besteht darin, daß zusätzlich eine Schrittweitensteuerung im Verlauf der globalen Optimierung erfolgt. Dies geschieht insbesondere durch eine Schrittweitenverkleinerung, falls ein zu großer Approximationsfehler vermutet wird (Wert für den vermuteten Approximationsfehler überschreitet eine vorgegebene Schranke), oder durch eine Schrittweitenvergrößerung, falls ein (sehr) kleiner Approximationsfehler vermutet wird (Wert für den vermuteten Approximationsfehler liegt unterhalb einer vorgegebenen Schranke).

Auch kann eine zusätzliche Schrittweitenverkleinerung durchgeführt werden, falls ein nach dem oben beschriebenen Verfahren ermittelter effizienter Arbeitspunkt als ein Startwert für ein nachfolgendes lokales Optimierungsverfahren eingesetzt wird. Dadurch kann gewährleistet werden, daß in der Nähe des lokalen Optimums eine Annäherung mit zunehmend geringerer Schrittweite erfolgt und damit das Optimum mit hoher Genauigkeit erreicht wird.

Eine andere Ausgestaltung besteht darin, daß die Stratonovich-Gleichung insbesondere die folgende Form aufweist:

$$X_t = X_a - \int_a^t P(X_s) \cdot F(X_s) \cdot ds + Z \qquad (1)$$

mit $t \geq a$ und $X_a = x_o$

wobei

a       einen Startzeitpunkt,

$x_0$       einen zulässigen Startparametervektor,

$X_t$       einen Lösungsparametervektor zum Zeitpunkt t,

$P(X_s)$       eine Projektionsmatrix im Parametervektor $X_s$,

$F(X_s)$       eine Aufstiegsrichtung im Parametervektor $X_s$,

Z       eine Zufallsgröße

bezeichnen.

Ferner kann die Aufstiegsrichtung bestimmt sein durch

$$F = \nabla f(X_s), \qquad (2),$$

wobei f die Zielfunktion bezeichnet.

In einer zusätzliche Ausgestaltung ist die Zufallsgröße Z bestimmt durch

$$Z = \varepsilon \cdot \int_a^t P(X_s) \circ dB_s \qquad (3),$$

wobei

$\varepsilon$       einen Skalierungsfaktor und

$\{B_s: s \geq a\}$       eine n-dimensionale Brownsche Bewegung

bezeichnen.

Aus [5] ist bekannt, daß eine numerische Lösung der stochastischen Differentialgleichung

$$X_t = X_a - \int_a^t \nabla f(X_s)ds + \varepsilon \cdot \int_a^t dB_s \quad , \quad t \geq a \qquad (4)$$

mit einem beliebigen Startparametervektor $x_0 \in \mathbf{R}^n$ (mit $\mathbf{R}$ für die Menge der reellen Zahlen) und der daraus resultierenden Startbedingung $X_a = x_o$ ein Verfahren zur globalen Optimierung von f auf dem Parameterraum darstellt.

Liegen zusätzlich Nebenbedingungen in Form von Gleichungen und Ungleichungen vor, die den Parameterraum eingrenzen, so wird insbesondere zunächst der zulässige Parameterraum mittels Einführung von Schlupfvariablen so umformuliert, daß er eine Mannigfaltigkeit beschreibt. In der obigen Differentialgleichung (4) werden nur noch diejenigen Anteile der Integranden berücksichtigt, die tangential zur Mannigfaltigkeit verlaufen. Dies geschieht durch Multiplikation mit Projektionsmatrizen. Es ergibt sich die besondere stochastische Differentialgleichung nach Gleichung (1) (insbesondere in Zusammenschau mit den Gleichungen (2) und (3)), die vom Typ einer Stratonovich-Differentialgleichung ist.

Eine zusätzliche Weiterbildung besteht darin, daß eine Nebenbedingung $h_i(x) \leq 0$, die in Form einer Ungleichung vorliegt, mittels einer Schlupfvariable umgeformt wird zu einer Gleichung. Diese Umformung hat insbesondere die Form

$$\tilde{h}_i(x, s) = h_i(x) + g(s) \qquad (5),$$

wobei

$g(s)$ eine Funktion mit einem Wertebereich aller reellen Zahlen größer gleich Null ($R_0^+$),
s die Schlupfvariable und
$h_i(x)$ eine Nebenbedingung $h_i(x) \leq 0$

bezeichnen.

Ferner kann die Funktion $g(s)$ bestimmt sein zu:

$$g(s) = s^2 \qquad (6).$$

Die Lösung der Gleichung (1) stellt einen stochastischen Prozeß

$$\{X_t: t \geq a\} \qquad (7)$$

dar. Es wird eine Folge zulässiger Parametervektoren

$$x_{t_1}, x_{t_2}, x_{t_3}, \dots \ (a < t_1 < t_2 < t_3 \dots) \qquad (8)$$

berechnet, die in Näherung Punkte eines Pfades des stochastischen Prozesses gemäß Gleichung (7) zu den Zeitpunkten $t_1, t_2, t_3, \dots$ darstellen. Ein Iterationsschritt kommt dabei auf die folgende Art zustande: Die Parametervektoren $x_{t_1}, x_{t_2}, x_{t_3}, \dots, x_{t_i}$ seien bereits berechnet, $x_{t_i}$ dient dann als Startpunkt für die Stratonovich-Gleichung (1), d.h. $a := t_i$. Ein Parametervektor $x_{t_{i+1}}$ wird als numerische Approximation eines Punktes des Pfades der Lösung gemäß Gleichung (7), der bereits die Punkte $x_{t_1}, x_{t_2}, x_{t_3}, \dots, x_{t_i}$ enthält, berechnet. Die Berechnung erfolgt zum Zeitpunkt $t_{i+1}$, d.h. $t = t_{i+1}$, die Schrittweite des Iterationsschritts ergibt sich zu $t_{i+1} - t_i$.

Eine Teilmenge der Folge (8), insbesondere diejenige mit den geringsten Zielfunktionswerten, dient zur Bestimmung der Startpunkte für eine sich anschließende lokale Suche nach dem Optimum.

Die Approximation der Stratonovich-Gleichung (1) erfolgt für den (i+1)-ten Iterationsschritt nach der folgenden Vorschrift (mit Hilfe der Trapezregel):

$$X_{t_{i+1}} \approx x_{t_i}$$
$$- \frac{t_{i+1} - t_i}{2}\left(P\!\left(x_{t_i}\right) \cdot \nabla f\!\left(x_{t_i}\right) + P\!\left(X_{t_{i+1}}\right) \cdot \nabla f\!\left(X_{t_{i+1}}\right)\right)$$
$$+ \frac{\varepsilon}{2}\left(P\!\left(x_{t_i}\right) + P\!\left(X_{t_{i+1}}\right)\right) \cdot \left(B_{t_{i+1}} - B_{t_i}\right)$$

$$(9)$$

Gleichung (9) ist eine implizite Gleichung für die Zufallsvariable $X_{t_{i+1}}$. Mit Hilfe des Newton-Verfahrens kann daraus eine Approximation $y_{t_{i+1}}$ für eine Realisierung der Zufallsvariablen $X_{t_{i+1}}$ bestimmt werden.

Der Punkt $y_{t_{i+1}}$ ist u.U. nicht zulässig. Anhand des Korrektors wird nun mit Hilfe eines Newtonverfahrens ein Punkt $x_{t_{i+1}}$ in der Nähe des Punktes $y_{t_{i+1}}$ ermittelt, welcher zulässig ist und als Startwert für einen nachfolgenden Iterationsschritt dient.

Eine andere Ausgestaltung besteht darin, daß der Entwurf ein Neuentwurf, eine Anpassung oder eine Steuerung des technischen Systems darstellt.

Für einen erfolgreichen Entwurf werden Werte für den Parametervektor bzw. den Arbeitspunkt bestimmt, die jeweils effizient sind. Eine effiziente Wertebelegung des Parametervektors bedeutet, daß kein Parameter verändert werden kann, ohne daß sich dadurch eine Verschlechterung einer Güte der Zielfunktion ergäbe.

Ein technisches System kann eine Anlage der Verfahrenstechnik oder ein sonstiges System sein, das im Hinblick auf unterschiedliche Parameter auszulegen oder einzustellen ist. Insbesondere können die Parameter des Parametervektors Auslegungsparameter oder Betriebsparameter des technischen Systems sein. Betriebsparameter kennzeichnen mögliche einstellbare Größen, wohingegen Auslegungsparameter insbesondere physikalische Abmessungen des technischen Systems beschreiben und während des Betriebs zumeist nur mit hohem Aufwand angepaßt oder verändert werden können.

Wahlweise kann mit dem beschriebenen Verfahren ein Neuentwurf des technischen Systems oder eine Anpassung eines bereits existierenden technischen Systems erfolgen. In beiden Fällen handelt es sich um einen Entwurf (einmal als Neugenerierung und einmal als Anpassung) im Sinne der vorliegenden Ausführungen.

Im Rahmen einer weiteren Ausgestaltung wird das technische System anhand der ermittelten Parameter realisiert bzw. eingestellt. Hierbei ist es von Vorteil, daß die Parameter in einen Parametervektor, der mittels der Erfindung bestimmt wurde, einen stabilen Betriebspunkt kennzeichnen und die Einstellung des Systems auf diesen Betriebspunkt einen dauerhaft sicheren Betrieb des Systems/ der Anlage gewährleistet.

Zur Lösung der Aufgabe wird weiterhin eine Anordnung zum Entwurf eines technischen Systems angegeben, bei der eine Prozessoreinheit vorgesehen ist, die derart eingerichtet ist, daß

a) das technische System eine Zielfunktion umfaßt, die von einem Parametervektor mit n Parametern beeinflußbar ist;

b) Nebenbedingungen vorgegeben sind, anhand derer Belegungen des Parametervektors bestimmbar sind, anhand derer ein Gebiet für gültige Arbeitspunkte des technischen Systems bestimmbar ist;

c) mittels eines Projektionsoperators, der das Gebiet für gültige Arbeitspunkte berücksichtigt, eine Stratonovich-Gleichung bestimmbar ist;

d) die Stratonovich-Gleichung numerisch lösbar und damit als Belegung des Parametervektors ein effizienter Arbeitspunkt ermittelbar ist;

e) der effiziente Arbeitspunkt zum Entwurf des technischen Systems einsetzbar ist.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig.1 einen Ablauf eines Verfahrens zum Entwurf eines technischen Systems;

Fig.2 eine Skizze, die eine numerische Lösung einer Stratonovich-Differentialgleichung veranschaulicht;

Fig.3 eine Skizze, die eine Projektionsmethode veranschaulicht;

Fig.4 eine Prozessoreinheit.

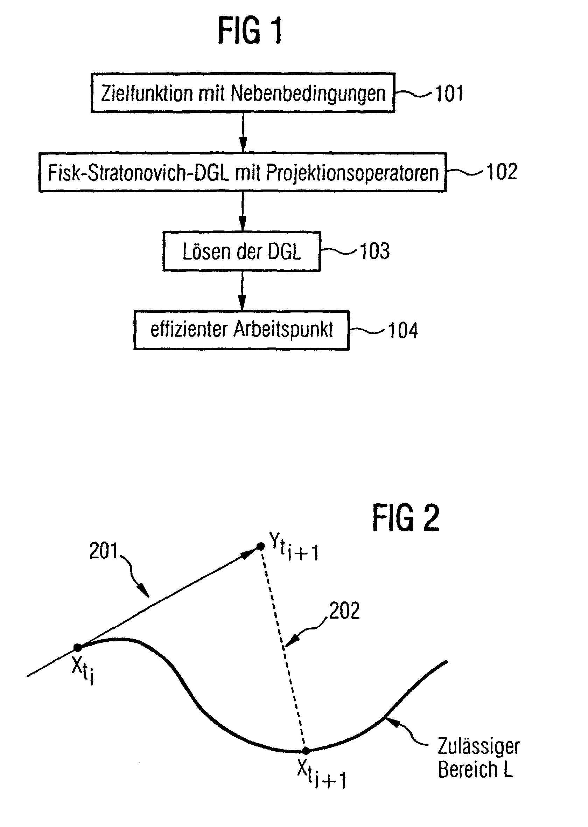

**Fig.1** zeigt ein Blockdiagramm, das den Ablauf eines Verfahrens zum Entwurf eines technischen Systems veranschaulicht. In einem Block 101 sind eine Zielfunktion und zugehörige Nebenbedingungen gegeben. Die Nebenbedingungen schränken einen Raum, der durch die Anzahl der n Parameter des Parametervektors bestimmt ist, auf ein Gebiet als Teil dieses Raumes ein. Als Parametervektor wird ein effizienter Arbeitspunkt aus diesem Gebiet ermittelt, indem eine Stratonovich-Gleichung unter Verwendung von Projektionsoperatoren, die die Nebenbedingungen berücksichtigen, aufgestellt und gelöst wird (vergleiche Blöcke 102 und 103). Ein Teil der gefundenen Arbeitspunkte dient als Startpunkte für eine lokale Suche, die wiederum einen optimalen Punkt (effizienten Arbeitspunkt) liefert (siehe Block 104). Insbesondere umfaßt die numerische Lösung der Stratonovich-Gleichung ein Prädiktor-Korrektor-Verfahren.

**Fig.2** veranschaulicht das Prädiktor-Korrektor-Verfahren. Ausgehend von einem Punkt $x_{t_i}$, der sich im zulässigen Arbeitsbereich L befindet, wird ein Punkt $y_{t_{i+1}}$ ermittelt (Anwendung des Newton-Verfahrens auf Gleichung (9)), der nicht mehr im zulässigen Bereich L liegt (Prädiktorschritt 201). Um den Punkt $y_{t_{i+1}}$ wieder in den zulässigen Bereich zu überführen wird ein Korrektorschritt 202 bestimmt, der zu dem Punkt $x_{t_{i+1}}$ führt. Das Zusammenspiel von Prädiktor und Korrektor wird iterativ mit gleichbleibener, abnehmender oder zunehmender Schrittweite wiederholt. Hierbei sei bemerkt, daß die Linie 201 nicht notwendigerweise tangential verläuft.

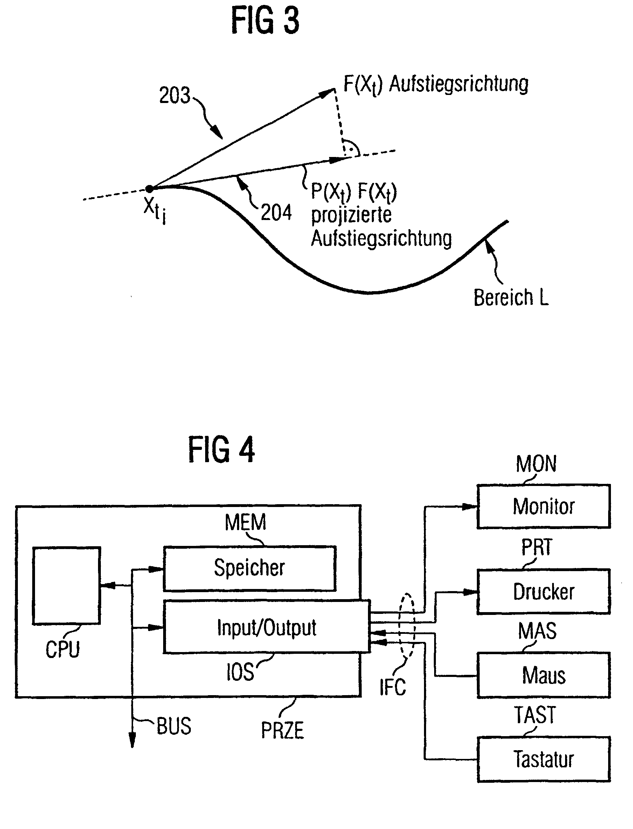

**Fig.3** veranschaulicht die Projektionsmethode. Wiederum ist der zulässiger Bereich L angegeben, auf dem

# EP 1 173 799 B1

sich der Punkt $x_{t_i}$ befindet. Die Linie 203 kennzeichnet eine Aufstiegsrichtung $F(X_t)$, eine Linie 204 deutet eine projizierte Aufstiegsrichtung $P(X_t) \cdot F(X_t)$ an.

In **Fig.4** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnis:

[1] K. Ritter, S. Schäffler: "A Stochastic Method for Constrained Global Optimization", SIAM 3.Optimization, Vol. 4, No.4, pp.894-904, 1994.

[2] D. G. Luenberger: "Linear and Nonlinear Programming", Addison-Wesley Publishing Company, Massachusetts, pp.334-337.

[3] P. Protter: "Stochastic Integration and Differential Equations - A New Approach", Springer Verlag, New York, pp.215-235.

[4] J. Stoer: "Numerische Mathematik 1", Springer-Verlag, Berlin, Heidelberg, 1994, pp.138-144.

[5] S. Schäffler: "Global Optimization Using Stochastic Integration"; Theorie und Forschung, Bd.340: Mathematik, Bd.3; Regensburg: Roderer, 1995; ISBN 3-89073-0; pp.19-29.

[6] T. Misawa: The Similary Method in Stochastic Dynamical Systems, IMA, Journal of Applied Mathematics, Bd. 59, Nr. 3, Dez. 1997 (1997-12), Seiten 261-272, XP000900649 UK

[7] M. Di Paola et al.: Stochastic Dynamics of Nun-Linear Systems Excited by Parametric Delta Correlated Processes, Proceedings of the 1996 7th Speciality Conference on Probabilistic Mechnaics and Structural and Geotechnical Reliability, 7. August 1996 (1996-08-07), Seiten 930-933, XP000900650 USA

[8] P. MC Clintock: Further Experimental Evidence Pertaining to the Applicability of the ITO and Stochastic Calculi to Real Physical Systems, Physics Letters, Bd. 107A, Nr. 8, 25. Februar 1985, 1985-02-25), Seiten 367-370, XP000900656 Netherlands

## Patentansprüche

1. Verfahren zum Entwurf eines technischen Systems,

   a) bei dem das technische System eine Zielfunktion umfasst, die von einem Parametervektor mit n Parametern beeinflusst wird,
   b) bei dem Nebenbedingungen vorgegeben sind, anhand derer Belegungen des Parametervektors bestimmt sind, die ein Gebiet für gültige Arbeitspunkte des technischen Systems bestimmen,
   c) bei dem mittels eines Projektionsoperators, der das Gebiet für gültige Arbeitspunkte berücksichtigt, eine Stratonovich-Gleichung bestimmt wird,
   d) bei dem die Stratonovich-Gleichung numerisch gelöst und damit als Belegung des Parametervektors ein effizienter Arbeitspunkt ermittelt wird,
   e) bei dem der effiziente Arbeitspunkt zum Entwurf des technischen Systems eingesetzt wird.

2. Verfahren nach Anspruch 1,
   bei dem die Stratonovich-Gleichung derart bestimmt wird, daß deren Lösung in dem Gebiet der gültigen Arbeitspunkte verläuft.

**3.** Verfahren nach Anspruch 1 oder 2,
bei dem die Stratonovich-Gleichung mittels eines Prädiktor-Korrektor-Verfahrens numerisch gelöst wird.

**4.** Verfahren nach Anspruch 3,
bei dem der Prädiktor anhand der Trapezregel bestimmt wird.

**5.** Verfahren nach Anspruch 3 oder 4,
bei dem der Korrektor mittels Newton-Verfahren bestimmt wird.

**6.** Verfahren nach einem der vorhergehenden Ansprüche,
bei dem zusätzlich eine Schrittweitensteuerung erfolgt.

**7.** Verfahren nach Anspruch 6,
bei dem die Schrittweitensteuerung derart erfolgt,

a) daß eine Schrittweitenverkleinerung durchgeführt wird, falls ein hinreichend großer Approximationsfehler ermittelt wird oder
b) daß eine Schrittweitenvergrößerung durchgeführt wird, falls ein hinreichend kleiner Approximationsfehler ermittelt wird.

**8.** Verfahren nach einem der vorhergehenden Ansprüche,
bei dem die Stratonovich-Gleichung die folgende Form aufweist:

$$X_t = X_a - \int_a^t P(X_s) \cdot F(X_s) \cdot ds + Z \quad \text{mit } t \geq a \text{ und } X_a = x_0$$

wobei

$a$      einen Startzeitpunkt ($a \geq 0$),
$x_0$      einen zulässigen Startparametervektor,
$X_t$      einen Lösungsparametervektor zum Zeitpunkt $t$,
$P(X_s)$      eine Projektionsmatrix im Parametervektor $X_s$,
$F(X_s)$      eine Aufstiegsrichtung,
$Z$      eine Zufallsgröße

bezeichnen.

**9.** Verfahren nach Anspruch 8,
bei dem die Aufstiegsrichtung bestimmt ist durch

$$F = \nabla f(X_s),$$

wobei $f$ die Zielfunktion bezeichnet.

**10.** Verfahren nach Anspruch 8 oder 9,
bei dem die Zufallsgröße bestimmt ist durch

$$Z = \varepsilon \cdot \int_a^t P(X_s) \circ dB_s$$

wobei

$\varepsilon$                einen Skalierungsfaktor und
$\{B_S: s \geq a$     eine n-dimensionale Brownsche Bewegung

bezeichnen.

**11.** Verfahren nach einem der vorhergehenden Ansprüche,
bei dem der ermittelte Arbeitspunkt als Startpunkt für ein lokales Optimierungsverfahren eingesetzt wird.

**12.** Verfahren nach einem der vorhergehenden Ansprüche,
bei dem eine Nebenbedingung, die in Form einer Ungleichung vorliegt, mittels einer Schlupfvariable s in eine Gleichung umgeformt wird.

**13.** Verfahren nach Anspruch 12,
bei dem die Nebenbedingung $h_i(x)$, die in Form der Ungleichung $h_i(x) \leq 0$ vorliegt, formuliert wird zu

$$\tilde{h}_i(x, s) = h_i(x) + g(s),$$

wobei

$g(s)$     eine Funktion mit einem Wertebereich aller reellen Zahlen größer gleich Null,
s         xdie Schlupfvariable und
$h_i(x)$     eine Nebenbedingung $h_i(x) \leq 0$

bezeichnen.

**14.** Verfahren nach Anspruch 13,
bei dem die Funktion $g(s)$ bestimmt ist zu

$$g(s) = s^2.$$

**15.** Verfahren nach einem der vorhergehenden Ansprüche,
bei dem der Entwurf ein Neuentwurf, eine Anpassung oder eine Steuerung des technischen Systems darstellt.

**16.** Anordnung zum Entwurf eines technischen Systems,
bei der eine Prozessoreinheit vorgesehen ist, die derart eingerichtet ist, dass

a) das technische System eine Zielfunktion umfasst, die von einem Parametervektor mit n Parametern beeinflussbar ist,
b) Nebenbedingungen vorgegeben sind, anhand derer Belegungen des Parametervektors bestimmbar sind, anhand derer ein Gebiet für gültige Arbeitspunkte des technischen Systems bestimmbar ist,
c) mittels eines Projektionsoperators, der das Gebiet für gültige Arbeitspunkte berücksichtigt, eine Stratonovich-Gleichung bestimmbar ist,
d) die Stratonovich-Gleichung numerisch lösbar und damit als Belegung des Parametervektors ein effizienter Arbeitspunkt ermittelbar ist,
e) der effiziente Arbeitspunkt zum Entwurf des technischen Systems einsetzbar ist.

**Claims**

**1.** Method for designing a technical system,

a) in which the technical system comprises a target function which is influenced by a parameter vector having n parameters;

b) in which secondary conditions are prescribed with the aid of which there are determined specific components of the parameter vector which determine a domain for valid working points of the technical system;
c) in which a Stratonovich equation which takes account of the domain for valid working points is determined by means of a projection operator;
d) in which the Stratonovich equation is solved numerically and an efficient working point is thereby determined as specification of the components of the parameter vector;
e) in which the efficient working point is used to design the technical system.

2. Method according to Claim 1, in which the Stratonovich equation is determined in such a way that its solution varies in the domain of the valid working points.

3. Method according to Claim 1 or 2, in which the Stratonovich equation is solved numerically by means of a predictor-corrector method.

4. Method according to Claim 3, in which the predictor is determined with the aid of the trapezium rule.

5. Method according to Claim 3 or 4, in which the corrector is determined by means of the Newton method.

6. Method according to one of the preceding claims, in which step size control is additionally performed.

7. Method according to Claim 6, in which the step size control is performed in such a way

   a) that a step size reduction is carried out if a sufficiently large approximation error is determined, or
   b) that a step size enlargement is carried out if a sufficiently small approximation error is determined.

8. Method according to one of the preceding claims, in which the Stratonovich equation has the following form:

$$X_t = X_a - \int_a^t P(X_s) \cdot F(\dot{X}_s) \cdot ds + Z \quad \text{with} \quad t \geq a \text{ and } X_a = x_o$$

where

a      denotes a starting instant ($a \geq 0$),
$x_0$    denotes a permissible starting parameter vector,
$X_t$    denotes a solution parameter vector at the instant t,
$P(X_s)$   denotes a projection matrix in the parameter vector $X_s$,
$F(X_s)$   denotes an ascending direction, and
Z      denotes a random variable.

9. Method according to Claim 9, in which the ascending direction is determined by

$$F = \nabla f(X_s),$$

f    denoting the target function.

10. Method according to Claim 8 or 9, in which the random variable is determined by

$$Z = \varepsilon \cdot \int_a^t P(X_s) \circ dB_s$$

where

$\varepsilon$ denotes a scaling factor, and

$\{B_s: s \geq a\}$ denotes an n-dimensional Brownian movement.

**11.** Method according to one of the preceding claims, in which the determined working point is used as starting point for a local optimization method.

**12.** Method according to one of the preceding Claims, in which a secondary condition which is present in the form of an inequality is transformed into an equation by means of a slack variable s.

**13.** Method according to Claim 12, in which the secondary condition $h_i(x)$, which is present in the form of the inequality $h_i(x) \leq 0$, is formulated as

$$\tilde{h}_i(x, s) = h_i(x) + g(s),$$

where

$g(s)$ denotes a function having a value range of all real values greater than or equal to zero,

s xdenotes the slack variable, and

$h_i(x)$ denotes a secondary condition $h_i(x) \leq 0$.

**14.** Method according to Claim 13, in which the function $g(s)$ is determined as

$$g(s) = s^2.$$

**15.** Method according to one of the preceding claims, in which the design constitutes a new design, an adaptation or a control of the technical system.

**16.** Arrangement for designing a technical system, in which a processor unit is provided which is set up in such a way that

a) the technical system comprises a target function which can be influenced by a parameter vector having n parameters;

b) secondary conditions are prescribed with the aid of which there can be determined specific components of the parameter vector which can be used to determine a domain for valid working points of the technical system;

c) a Stratonovich equation which takes account of the domain for valid working points can be determined by means of a projection operator;

d) the Stratonovich equation can be solved numerically and an efficient working point can be determined thereby as specification of the components of the parameter vector;

e) the efficient working point can be used to design the technical system.

**Revendications**

**1.** Méthode destinée à développer un système technique

a) dans laquelle le système technique comprend une fonction cible, qui est influencée par un vecteur à paramètres comportant n paramètres,

b) dans laquelle des conditions accessoires sont données, à l'aide desquelles des occupations du vecteur à paramètres sont définies, ces occupations définissant une zone pour des points valables de fonctionnement du système technique,

c) dans laquelle on définit, au moyen d'un opérateur de projection, qui tient compte de la zone pour des points valables de fonctionnement, une équation de Stratonovich,

d) dans laquelle on résout numériquement l'équation de Stratonovich et, ainsi, en tant qu'occupation du vecteur à paramètres, un point efficace de fonctionnement,

e) dans laquelle le point efficace de fonctionnement est utilisé pour développer le système technique.

**2.** Méthode selon la revendication 1
dans laquelle l'équation de Stratonovich est définie de telle manière que sa solution se trouve dans la zone des points valables de fonctionnement.

**3.** Méthode selon la revendication 1 ou 2
dans laquelle on résout numériquement l'équation de Stratonovich à l'aide d'une méthode à prédicteur et correcteur.

**4.** Méthode selon la revendication 3
dans laquelle le prédicteur est déterminé à l'aide de la règle du trapèze.

**5.** Méthode selon la revendication 3 ou 4
dans laquelle le correcteur est déterminé au moyen d'une méthode de Newton.

**6.** Méthode selon l'une des revendications précédentes
dans laquelle on procède, en plus, à une commande des incréments.

**7.** Méthode selon la revendication 6
dans laquelle la commande des incréments se fait de telle sorte

a) qu'on procède à un raccourcissement des incréments lorsqu'une erreur d'approximation suffisamment importante est détectée ou
b) qu'on procède à un agrandissement des incréments lorsqu'une erreur d'approximation suffisamment faible est détectée.

**8.** Méthode selon l'une des revendications précédentes
dans laquelle l'équation de Stratonovich a la forme suivante:

$$X_t = X_a - \int_a^t P(X_s) \cdot F(X_s) \cdot ds + Z \quad \textbf{avec } t \geq a \textbf{ et } X_a = x_O$$

dans laquelle

$a$     désigne un instant de démarrage ($a \geq 0$),
$x_0,$     un vecteur à paramètres de démarrage admissible,
$x_t,$     un vecteur à paramètres de solution à l'instant t,
$P(X_s),$     xune matrice de projection dans le vecteur à paramètres $X_s,$
$F(X_s),$     une direction ascendante et
$Z,$     une grandeur aléatoire.

**9.** Méthode selon la revendication 8
dans laquelle la direction ascendante est déterminée par

$$F = \nabla f(X_s)$$

dans laquelle f désigne la fonction cible.

**10.** Méthode selon la revendication 8 ou 9
dans laquelle la grandeur aléatoire est déterminée par

$$Z = \varepsilon \cdot \int_a^t P(X_s) \circ dB_s$$

dans laquelle

$\varepsilon$          désigne un facteur d'échelle et
$\{B_s : s \geq a\}$,     un déplacement de Brown à n dimensions.

**11.** Méthode selon l'une des revendications précédentes
dans laquelle le point de fonctionnement déterminé est utilisé comme point de départ pour une méthode locale d'optimisation.

**12.** Méthode selon l'une des revendications précédentes
dans laquelle une condition accessoire, qui se présente sous la forme d'une inégalité, est transformée en une équation au moyen d'une variable de glissement s.

**13.** Méthode selon la revendication 12
dans laquelle la condition accessoire $h_i(x)$, qui se présente sous la forme de l'inégalité $h_i(x) \leq 0$, est transformée et devient

$$\tilde{h}_i(x, s) = h_i(x) + g(s)$$

dans laquelle

$g(s)$     désigne une fonction ayant une plage de valeurs de tous les nombres réels supérieurs ou égaux à zéro,
$s$,       la variable de glissement et
$h_i(x)$,    une condition accessoire $h_i(x) \leq 0$.

**14.** Méthode selon la revendication 13
dans laquelle la fonction $g(s)$ est définie par

$$g(s) = s^2.$$

**15.** Méthode selon l'une des revendications précédentes
dans laquelle le développement constitue un nouveau développement, une adaptation ou une commande du système technique.

**16.** Dispositif destiné à développer un système technique
dans lequel est prévue une unité à processeur conçue de telle sorte

a) que le système technique comprend une fonction cible, qui peut être influencée par un vecteur à paramètres comportant n paramètres,
b) que des conditions accessoires sont données, à l'aide desquelles des occupations du vecteur à paramètres peuvent être définies, ces occupations permettant de définir une zone pour des points valables de fonctionnement du système technique,
c) que l'on peut définir, au moyen d'un opérateur de projection, qui tient compte de la zone pour des points valables de fonctionnement, une équation de Stratonovich,
d) que l'on peut résoudre numériquement l'équation de Stratonovich et, qu'ainsi, on peut définir, en tant qu'occupation du vecteur à paramètres, un point efficace de fonctionnement,
e) que le point efficace de fonctionnement peut être utilisé pour développer le système technique.

# FIG 1

Zielfunktion mit Nebenbedingungen —101

↓

Fisk-Stratonovich-DGL mit Projektionsoperatoren —102

↓

Lösen der DGL —103

↓

effizienter Arbeitspunkt —104

# FIG 2

201

$Y_{t_{i+1}}$

202

$X_{t_i}$

$X_{t_{i+1}}$

Zulässiger
Bereich L

## FIG 3

F(X$_t$) Aufstiegsrichtung

203

P(X$_t$) F(X$_t$)
projizierte
Aufstiegsrichtung

204

X$_{t_i}$

Bereich L

## FIG 4

MON

Monitor

MEM

Speicher

PRT

Drucker

Input/Output

MAS

IOS

CPU

Maus

IFC

BUS

PRZE

TAST

Tastatur